Europäisches Patentamt

European Patent Office

Office européen des brevets

(19)

(11) Publication number: **0 102 693**
**B1**

# EUROPEAN PATENT SPECIFICATION

(12)

(45) Date of publication of patent specification: **10.09.86**

(51) Int. Cl.⁴: **B 23 H 7/04**

(21) Application number: **83303555.3**

(22) Date of filing: **21.06.83**

(54) **Wire-cut electric discharge machine.**

(30) Priority: **30.06.82 JP 112807/82**

(43) Date of publication of application:
**14.03.84 Bulletin 84/11**

(45) Publication of the grant of the patent:
**10.09.86 Bulletin 86/37**

(84) Designated Contracting States:
**CH DE FR GB LI**

(56) References cited:
**EP-A-0 037 240**
**EP-A-0 068 027**
**EP-A-0 068 029**
**DE-A-2 052 123**
**DE-A-2 628 268**
**DE-A-3 035 098**
**GB-A-1 410 937**
**US-A-4 314 133**
**US-A-4 321 451**
**US-A-4 361 745**

(73) Proprietor: **FANUC LTD**
**3580, Shibokusa Aza-Komanba Oshino-mura**
**Minamitsuru-gun Yamanashi 401-05 (JP)**

(72) Inventor: **Obara, Haruki**
**844-7, Hashimoto**
**Sagamihara-shi Kanagawa-ken, 229 (JP)**

(74) Representative: **Billington, Lawrence Emlyn**
**et al**
**HASELTINE LAKE & CO Hazlitt House 28**
**Southampton Buildings Chancery Lane**
**London WC2A 1AT (GB)**

(56) References cited:
**PATENT ABSTRACTS OF JAPAN, unexamined
applications, M Section, vol. 6, no. 20, February
5, 1982, THE PATENT OFFICE JAPANESE
GOVERNMENT, page 161 M 110**

# Description

The present invention relates to improvements in a wire-cut electric discharge machine which employs a servo feed method that controls the relative feed rate of a workpiece and a wire electrode. More particularly, the invention pertains to a wire-cut electric discharge machine which is adapted to change-over electrical cutting conditions in accordance with the thickness of a workpiece for its efficient electric discharge machining.

When cutting a workpiece with a wire-cut electric discharge machine of the type which moves the workpiece and a wire electrode relative to each other and cuts the workpiece, by electrical discharge, into a desired shape, efficient cutting can be achieved by making the electrical cutting conditions (e.g. no-load voltage, peak current, ON time, etc.) large in proportion to the thickness of the workpiece. Thus, the thicker the workpiece, the more electrical power is employed in its cutting.

On account of this, there has been proposed in EP—A—37240 a wire-cut electric discharge machine adapted to switch the electrical cutting conditions in accordance with the thickness of the workpiece, but the conventional machine of this kind possesses a defect as follows: The prior art machine employs a servo feed which controls the relative feed rate of the workpiece and the wire electrode so that the mean cutting voltage may be constant, and is designed to detect the thicknes of the workpiece on the basis of the feed rate (which decreases with an increase in the thickness of the workpiece) and to switch the electrical cutting conditions on the basis of the detected thickness. Accordingly, a reduction of the feed rate resulting from an undesired arc discharge (which does not actually machine the workpiece but merely makes a rough surface on the workpiece) is incorrectly regarded to have resulted from an increase in the thickness of the workpiece, and therefore the electrical cutting conditions are made large, which is undesirable and merely results in further degradation of the state of discharge.

According to the present invention there is provided a wire-cut electric discharge machine comprising a servo feed system operable to produce relative movement between a workpiece and a wire electrode to cut the workpiece by a discharge into a desired shape, the machine further comprising:

cutting current detecting means for detecting cutting current;

feed rate detecting means for detecting the relative feed rate of the workpiece and the wire electrode; and

control means for changing over electrical cutting conditions in dependence upon workpiece thickness as indicated in dependence upon the detected cutting current and feed rate;

characterised by:

input means for inputting the width of a cutting groove;

thickness computing means for computing for the control means the thickness of the workpiece on the basis of the detected cutting current, the detected feed rate, and the width of the cutting groove as provided by the input means;

decision means operable to decide whether the currrent being produced by the machine is a true cutting current or a current produced by an undesirable phenomenon such as an arc discharge, the decision means being operable to prevent the control means changing over the electrical cutting conditions in dependence upon a current which the decision means decides is not a true cutting current.

The present invention thus provides a wire-cut electric discharge machine which is adapted to detect a correct thickness of a workpiece and to switch the electrical cutting conditions on the basis of the detected thickness, thereby ensuring efficient and accurate electric discharge machining.

The present invention further provides a wire-cut electric discharge machine which is designed to eliminate the possibility that during an arc discharge the electric cutting conditions are erroneously changed in a sense to deteriorate further the state of discharge.

For a better understanding of the invention and to show how it may be put into effect, reference will now be made by way of example to the accompanying drawings in which:

Fig. 1 is a block diagram illustrating an embodiment of the present invention;

Fig. 2 is a flowchart showing the operation of the embodiment illustrated in Fig. 1; and

Fig. 3 is a table showing the stored contents of a memory.

To facilitate a better understanding of the present invention, a description will be given of the principle of the invention. Incidentally, the present invention is applied in the description of the drawings to a wire-cut electric discharge machine which is equippped with a servo feed function of controlling the relative feed rate of the workpiece and the wire electrode so that the mean cutting voltage may be substantially constant.

The rate of cutting W of the workpiece per unit time by wire-cut electric discharge using rectangular current pulses as discharge pulses can be expressed by the following expression (1).

$$W = d \cdot h \cdot F = \eta \cdot V_G \cdot I_p \cdot \tau \cdot f = \eta \cdot V_G \cdot I_T \quad (1)$$

where d is the width of the cutting groove, h is the thickness of the workpiece, F is the relative feed rate of the wire electrode and the workpiece, $\eta$ is efficiency $V_G$ is a gap voltage, $I_p$ is a peak current, $\tau$ is the width of each current pulse flowing across the spark gap (hereinafter referred to as the actual current pulse width), f is the discharge frequency and $I_T$ is a mean of cutting currents contributing to electric discharge machining (hereinafter referred to as the mean true cutting current) omitting short-circuit current and an arc current across the spark gap.

From expression (1) can be obtained the following expression (2):

$$h = \eta \cdot V_G \cdot \frac{I_T}{F \cdot d} \qquad (2)$$

The efficiency $\eta$ and the gap voltage $V_G$ vary mainly with the quality of the workpiece and the wire electrode but they can be regarded as substantially constant if the quality of the workpiece does not change during cutting. Accordingly, expression (2) can be rewritten as follows:

$$h = K \cdot \frac{I_T}{F \cdot d} \qquad (3)$$

where K is a constant which is dependent upon the quality of the wire electrode and workpiece material.

Accordingly, since the thickness h of the workpiece can be obtained by obtaining the true cutting current $I_T$, the feed rate F and the width of the cutting groove d and carrying out the calculation of expression (3), it is possible to switch the electrical cutting conditions in dependence upon the thickness h by switching them in dependence upon the values $I_T$, F and d. In such a case, the thickness h is obtained on the basis of the true cutting current $I_T$, which is free from current which does not contribute to the electric discharge machining (for example short-circuit current and arc current across the spark gap) therefore, an accurate thickness h of the workpiece can be obtained employing the aforementioned values. The above is a description given of the case of employing rectangular current pulses but it has been ascertained that exactly the same result can be obtained also in the case of wire-cut electric discharge machining of the type using discharge of a capacitor.

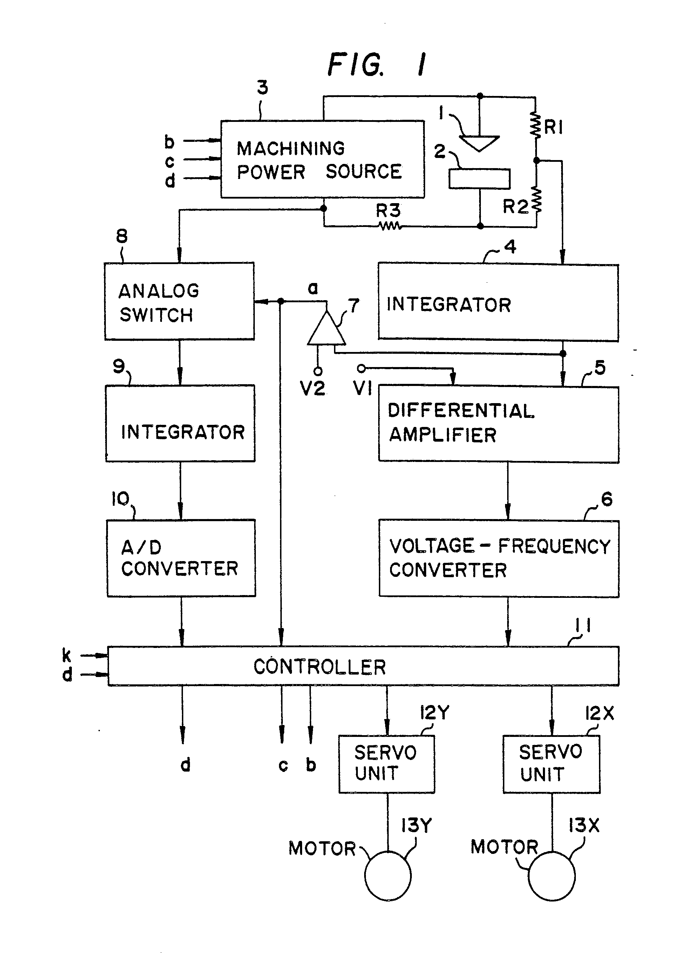

Fig. 1 illustrates in block form a wire-cut electric discharge which embodies the present invention. Reference numeral 1 indicates a wire electrode; 2 designates a workpiece 3 identifies a cutting power source; 4 denotes an integrator; 5 represents a differential amplifier for amplifying the difference between a reference voltage $V_1$ and the output of the integrator 4; 6 shows a voltage-frequency converter; 7 refers to a comparator for comparing a reference voltage $V_2$ and the output of the integrator 4 and yields a "1" at its output a while the output of the integrator 4 is larger than the reference voltage $V_2$; 8 signifies an analog switch which is "ON" while the output a of the comparator 7 is at "1", 9 indicates an integrator; 10 designates an A/D converter; 11 identifies a numerical controller; 12X and 12Y denote X-axis and Y-axis servo units, respectively; 13X and 13Y represent X-axis and Y-axis motors for moving the wire electrode 1 and the workpiece 2 relative to each other; and R1 to R3 show resistors.

The integrator 4 is to smooth a voltage across the wire electrode 1 and the workpiece 2 voltage-divided by the resistors R1 and R2, and the output of the integrator 4 corresponds to the mean cutting voltage. The differential amplifier 5 amplifies the difference between the output of the integrator 4 and the reference voltage V1 and applies the amplified output to the voltage-frequency converter 6. The numerical controller 11 distributes pulse signals from the voltage-frequency converter 6 to produce signals for controlling the operation of the motors 13X and 13Y and provides the control signals to the servo units 12X and 12Y. By this, the wire electrode 1 and the workpiece 2 are fed relative to each other at such a speed that the mean cutting voltage may be constant. Since the above-described operation is well-known in the art, no detailed description will be given thereof.

The comparator 7 compares the output of the integrator 4 and the reference voltage V2 and, while the reference voltage V2 remains lower than the integrator output, yields a "1" at its output a on the assumption that the discharge between the wire electrode 1 and the workpiece 2 is normal. When the reference voltage V2 is higher than the integrator output, the comparator 7 yields a "0" at the output a on the assumption that the wire electrode 1 and the workpiece 2 are arcing, which output is provided to control the analog switch 8 and to the numerical controller 11. Consequently, only while the discharge between the wire electrode 1 and the workpiece 2 is normal, is a current signal from the current detecting resistor R3 applied via the analog switch 8 to the integrator 9. The integrator 9 smoothes the current signal applied thereto via the analog switch 8 and provides it to the A/D converter 10, the output of which corresponds to the true cutting current. Incidentally the reference voltage V2 is set to a value intermediate between the output voltage of the integrator 4 during normal discharge and the lower output voltage of the integrator 4 during the arc discharge.

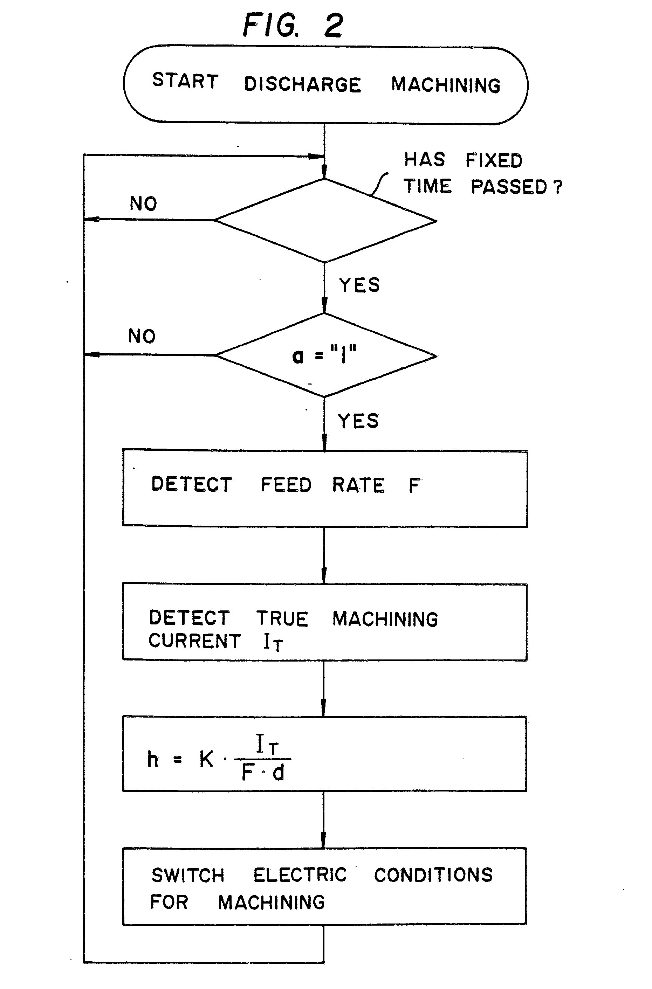

The numerical controller 11 controls the motors 13X and 13Y and, further performs at regular time intervals such processing as shown in the flowchart of Fig. 2 on the basis of the output of the voltage-frequency converter 6, the output of the A/D converter 10, the constant K dependent on the quality of the workpiece and the wire electrode and the width of the cutting groove d, which are entered from an external keyboard or the like (not shown). The width of the cutting groove d is obtained by test cutting in advance. Next, a description will be given, with reference to Fig. 2, of the operation of the above-described embodiment of Fig. 1.

The numerical controller 11 detects at regular time intervals whether the output a of the comparator 7 is a "1" or not and, in the case of the output a being a "1", obtains the relative feed rate F of the wire electrode 1 and the workpiece 2 on the basis of the output of the voltage-frequency converter 6 and obtains the true cutting current $I_T$

on the basis of the output of the A/D converter 10 and then conducts the calculation of the aforementioned expression (3) to obtain the thickness h of the workpiece 2.

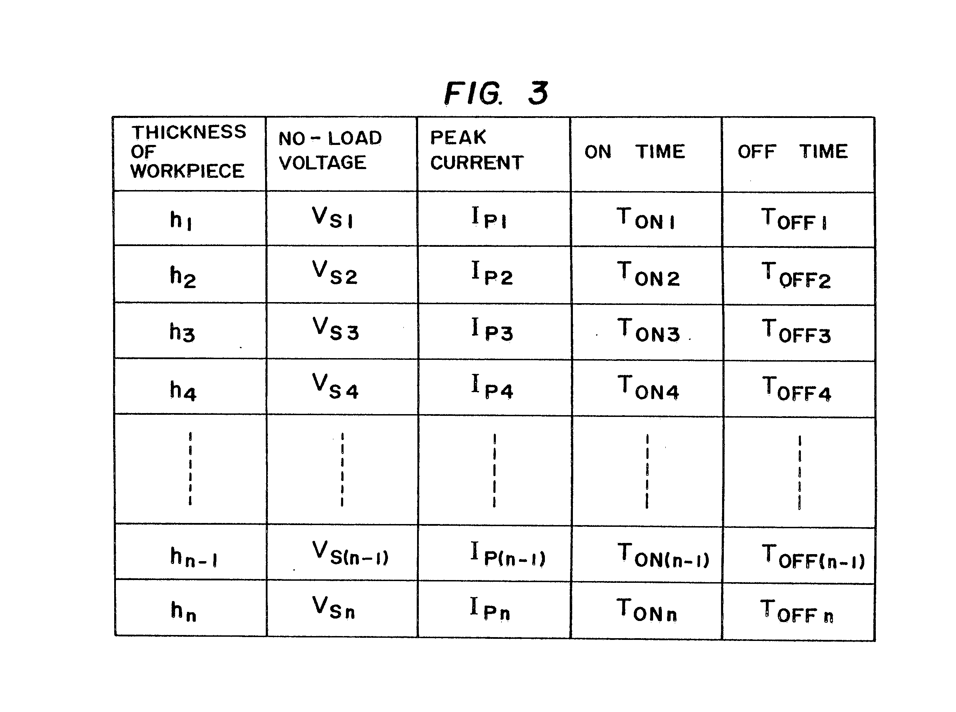

In a memory (not shown) in the numerical controller 11 are stored no-load voltages $V_{S1}$ to $V_{Sn}$, peak currents $I_{P1}$ to $I_{pn}$, ON times $T_{ON1}$ to $T_{ONn}$ and OFF times $T_{OFF1}$ to $T_{OFFn}$ corresponding to workpiece thicknesses $h_1$ to $h_n$ (where $h_{n-1} < h_n$) as shown in Fig. 3. When it has obtained the thickness h from expression (3), the numerical controller 11 compares the thickness h with those $h_1$ to $h_n$ stored in the memory and switches the electrical cutting conditions on the basis of the comparison results. In this case, if $h_1 < h < h_2$, the numerical controller 11 reads out the electrical cutting conditions $V_{S1}$, $I_{P1}$, $T_{ON1}$ and $T_{OFF1}$ corresponding to the thickness $h_1$ and produces control signals b, c and d for controlling the no-load voltage, the peak current and the ON—OFF time on the basis of such electrical cutting conditions, which control signals are provided to the cutting power source 3 to change over the electrical cutting conditions. That is to say, if $h_{n-1} < h < h_n$, the electrical cutting conditions are set to the values corresponding to the thickness $h_{n-1}$. It is a matter of course that the electrical cutting conditions corresponding to the thickness $h_{n-1}$ generate smaller cutting power than the electrical cutting conditions corresponding to the thickness $h_n$.

While in the foregoing the constant K is described as being entered from a keyboard, it is also possible to prestore constants $K_1$ to $K_m$ corresponding to various materials of workpieces and wire electrodes in the numerical controller 11 for selective use by the user. In the case where the constant K is not prestored in the numerical controller 11, it may also be automatically calculated, stored and used in the following manner. That is, in the case of employing a wire-cut electric discharge machine, it is customary to conduct test cutting for measuring and checking the width of the cutting groove, the stability of cutting and so forth prior to actual cutting, so that, at the stage of this test cutting, the electric cutting conditions are properly selected and set and the thickness h of the workpiece to be cut is entered into the numerical controller 11 from a keyboard or the like. In this state cutting is carried out and the true cutting current $I_T$ and the feed rate F during the cutting are stored in the numerical controller 11. After the test cutting, the width of the cutting groove d is measured and input into the numerical controller 11. Then the numerical controller 11 can store the constant K after calculating it through using the following expression (4) into which expression (3) is transformed:

$$K = \frac{F \cdot d \cdot h}{I_T} \qquad (4)$$

Accordingly, when a workpiece of the same material is cut using a wire electrode of the same material afterwards, the constant K prestored as described above can be employed, so that even if the thickness of the workpiece differs from the thickness of the workpiece cut before, it is possible to automatically decide the thickness and change over the electrical cutting conditions.

Although in the foregoing the present invention has been described as being applied to a wire-cut electric discharge machine with a servo feed system that controls the feed rate so that the mean cutting voltage may be constant, the invention is also applicable to a wire-cut electric discharge machine which is adapted to make the mean cutting current constant or employing some other servo feed system.

As has been described in the foregoing, the wire-cut electric discharge machine of the present invention is equipped with cutting current detecting means (which comprises the comparator 7, the analog switch 8 and the integrator 9 in the embodiment) for detecting a true cutting current, feed rate detecting means (which comprises the voltage-frequency converter 6 and the numerical controller 11 in the embodiment), input means for inputting the width of the cutting groove, such as a keyboard, and thickness detecting means (which comprises the cutting power source 3 and the numerical controller 11 in the embodiment) for detecting the thickness of a workpiece on the basis of the true cutting current, the feed rate and the width of the cutting groove. Therefore, the wire-cut electric discharge machine of the present invention is capable of changing over the electric cutting conditions in accordance with the thickness of the workpiece, and hence permits efficient electric discharge machining. Furthermore, since the thickness of the workpiece is obtained on the basis of the true cutting current, there is no possibility of making the electric cutting conditions large during arcing across the spark gap to degrade the state of discharge as in the prior art and, consequently, highly accurate electric discharge machining can be achieved.

It will be apparent that many modifications and variations may be effected without departing from the scope of the present invention as defined by the appended claims.

**Claims**

1. A wire-cut electric discharge machine comprising a servo feed system operable to produce relative movement between a workpiece (2) and a wire electrode (1) to cut the workpiece (2) by a discharge into a desired shape, the machine further comprising:
   cutting current detecting means (R3) for detecting cutting current ($I_T$);
   feed rate detecting means for detecting the relative feed rate (F) of the workpiece (2) and the wire electrode (1); and
   control means (11) for changing over electrical cutting conditions in dependence upon workpiece thickness as indicated in dependence upon the detected cutting current ($I_T$) and feed rate (F);

characterized by:

input means for inputting the width (d) of a cutting groove;

thickness computing means for computing for the control means (11) the thickness (h) of the workpiece (2) on the basis of the detected cutting current ($I_T$), the detected feed rate (F), and the width (d) of the cutting groove as provided by the input means;

decision means (R1, R2, 4, 7) operable to decide whether the current ($I_T$) being produced by the machine is a true cutting current or a current produced by an undesirable phenomenon such as an arc discharge, the decision means (R1, R2, 4, 7) being operable to prevent the control means (11) changing over the electrical cutting conditions in dependence upon a current ($I_T$) which the decision means (R1, R2, 4, 7) decides is not a true cutting current.

2. A machine according to claim 1, wherein the decision means (R1, R2, 4, 7) is operable to inhibit operation of the thickness computing means when the decision means detects a current ($I_T$) which is not a true cutting current.

3. A machine according to claim 2, comprising a switch (8) coupled between the cutting current detecting means (R3) and the thickness computing means, which switch (8) is operable by the decision means (R1, R2, 4, 7) to prevent the detected current ($I_T$) being fed into the thickness computing means when the decision means detects a current ($I_T$) which is not a true cutting current.

4. A machine according to any preceding claim, wherein the decision means comprises a detector (R1, R2, 4) for the cutting voltage between the workpiece (2) and the wire electrode (1), and a comparator (7) which compares the detected cutting voltage with a reference value (V2) thereof, the decision means deciding that the current produced by the machine is not a true cutting current when the detected cutting voltage is less than said reference value (V2).

5. A machine according to claim 4, wherein the detected cutting voltage is the mean cutting voltage.

6. A machine according to claim 5, wherein said cutting voltage detector comprises an integrator (4) coupled to resistors (R1, R2) connected across the workpiece (2) and the wire electrode (1).

7. A machine according to claim 5 or 6, wherein the servo feed system is arranged to control the feed rate (F) to maintain the mean cutting voltage substantially constant.

8. A machine according to any preceding claim, wherein said input means comprises a keyboard.

**Patentansprüche**

1. Schneiddrahtelektroerosionsmaschine mit einem Servovorschubsystem, das betreibbar ist, um eine relative Bewegung zwischen einem Werkstück (2) und einer Dahtelektrode (1) zu erzeugen, um das Werkstück (2) durch eine Entladung in eine gewünschte Form zu schneiden, wobei die Maschine desweiteren

ein Schneidstromerfassungsmittel (R3) zum Erfassen eines Schneidstroms ($I_T$),

ein Vorschubgeschwindigkeitserfassungsmittel zum Erfassen der relativen Vorschubgeschwindigkeit (F) des Werkstücks (2) und der Drahtelektrode (1) und

ein Steuermittel (11) zum Umschalten der elektrischen Schneidbedingungen in Abhängigkeit von der Werkstückdicke, wie sie Abhängigkeit von dem erfaßten Schneidstrom ($I_T$) und der Vorschubgeschwindigkeit (F) angezeigt wird, enthält,

gekennzeichnet durch

ein Eingabemittel zum Eingeben der Breite (d) einer Schneidfuge,

ein Dickenberechnungsmittel zum Berechnen der Dicke (h) des Werkstücks (2) für das Steuermittel (11) auf der Grundlage des erfaßten Schneidstroms ($I_T$), der erfaßten Vorschubgeschwindigkeit (F) und der Breite (d) der Schneidfuge, wie sie durch das Eingabemittel vorgesehen ist, und

Entscheidungsmittel (R1, R2, 4, 7), die betreibbar sind, um zum entscheiden, ob der Strom ($I_T$), der durch die Maschine erzeugt wird, ein wirklicher Schneidstrom oder ein Strom ist, der durch einen unerwünschten Vorgang, beispielsweise eine Bogenentladung, erzeugt wird, wobei die Entscheidungsmittel (R1, R2, 4, 7) betreibbar sind, um das Steuermittel (11) daran zu hindern, die elektrischen Schneidbedingungen in Abhängigkeit von einem Strom ($I_T$) umzuschalten, über den die Entscheidungsmittel (R1, R2, 4, 7) so entschieden haben, daß er kein wirklicher Schneidstrom ist.

2. Maschine nach Anspruch 1, bei der die Entschiedungsmittel (R1, R2, 4, 7) betreibbar sind, um den Betrieb des Dickenberechnungsmittels zu sperren, wenn die Entscheidungsmittel einen Strom ($I_T$) erfassen, der kein wirklicher Schneidstrom ist.

3. Maschine nach Anspruch 2, mit einem Schalter (8), der zwischen das Schneidstromerfassungmittel (R3) und das Dickenberechnungsmittel geschaltet ist, wobei der Schalter (8) durch die Entscheidungsmittel (R1, R2, 4, 7) betätigbar ist, um zu verhindern, daß der erfaßte Strom ($I_T$) dem Dickenberechnungsmittel zugeführt wird, wenn die Entscheidungsmittel einen Strom ($I_T$) erfassen, der kein wirklicher Schneidstrom ist.

4. Maschine nach einem der vorhergehenden Ansprüche, bei der die Entscheidungsmittel einen Detektor (R1, R2, 4) für die Schneidspannung zwischen dem Werkstück (2) und der Drahtelektrode (1) und einen Komparator (7) enthalten, der die erfaßte Schneidspannung mit einem Referenzwert (V2) davon vergleicht, wobei die Entscheidungsmittel entscheiden, daß der Strom, der durch die Maschine erzeugt wird, kein wirklicher Schneidstrom ist, wenn die erfaßte Schneidspannung geringer als der genannte Referenzwert (V2) ist.

5. Maschine nach Anspruch 4, bei der die erfaßte Schneidspannung die mittlere Schneidspannung ist.

6. Maschine nach Anspruch 5, bei der der Schneidspannungsdetektor einen Integrator (4) enthält, der mit Widerständen (R1, R2) verbunden ist, die an das Werkstück (2) und die Drahtelektrode (1) angeschlossen sind.

7. Maschine nach Anspruch 5 oder 6, bei der das Servovorschubsystem angeordnet ist, um die Vorschubgeschwindigkeit (F) zu regeln, um die mittlere Schneidspannung im wesentlichen konstant zu halten.

8. Maschine nach einem der vorhergehenden Ansprüche, bei der das Eingabemittel aus einem Tastenfeld besteht.

**Revendications**

1. Une machine d'électroérosion à fil comprenant un système d'asservissement d'avance capable de produire un mouvement relatif entre une pièce (2) et une électrode en forme de fil (1) pour découper la pièce (2) au moyen d'une décharge, de façon à lui donner une forme désirée, cette machine comprenant en outre:
des moyens de détection de courant de coupe (R3) destinés à détecter un courant de coupe ($I_T$);
des moyens de détection de vitesse d'avance destinés à détecter la vitesse d'avance relative (F) de la pièce (2) et de l'électrode en forme de fil (1); et
des moyens de commande (11) destinés à commuter les conditions électriques de coupe sous la dépendance de l'épaisseur de la pièce, déterminée sous la dépendance du courant de coupe ($I_T$) et de la vitesse d'avance (F) détectés;
caractérisée par:
des moyens d'entrée destinés à l'introduction de la largeur (d) d'une saignée de coupe;
des moyens de calcul d'épaisseur destinés à calculer l'épasseur (h) de la pièce (2), pour les moyens de commande (1), sur la base du courant de coupe détecté ($I_T$), de la vitesse d'avance détectée (F), et de la largeur (d) de la saignée de coupe, fournie par les moyens d'entrée;
des moyens de décision (R1, R2, 4, 7) capables de déterminer si le courant ($I_T$) qui est produit par la machine est un courant de coupe vrai ou un courant produit par un phénoméne indésirable tel qu'une décharge d'arc, les moyens de décision (R1, R2, 4, 7) pouvant fonctionner de façon à empêcher les moyens de commande (11) de commuter les conditions électriques de coupe sous la dépendance d'un courant ($I_T$) pour lequel les moyens de décision (R1, R2, 4, 7) ont déterminé qu'il ne s'agissait pas d'un courant de coupe vrai.

2. Une machine selon la revendication 1, dans laquelle les moyens de décision (R1, R2, 4, 7) sont capables d'empêcher le fonctionnement des moyens de calcul d'épaisseur lorsque ces moyens de décision détectent un courant ($I_T$) qui n'est pas un courant de coupe vrai.

3. Une machine selon la revendication 2, comprenant un interrupteur (8) branché entre les moyens de détection de courant de coupe (R3) et les moyens de calcul d'épaisseur, et cet interrupteur (8) peut être actionné par les moyens de décision (R1, R2, 4, 7) pour empêcher que le courant détecté ($I_T$) soit appliqué aux moyens de calcul d'épaisseur lorsque les moyens de décision détectent un courant ($I_T$) qui n'est pas un courant de coupe vrai.

4. Une machine selon l'une quelconque des revendications précédentes, dans laquelle les moyens de décision comprennent un détecteur (R1, R2, 4) pour la tension de coupe entre la pièce (2) et l'électrode en forme de fil (1), et un comparateur (7) qui compare la tension de coupe détectée avec une valeur de référence (V2) pour celle-ci, et les moyens de décision déterminent que le courant produit par la machine n'est pas un courant de coupe vrai lorsque la tension de coupe détectée est inférieur à la valeur de référence (V2).

5. Une machine selon la revendication 4, dans laquelle la tension de coupe détectée est la tension de coupe moyenne.

6. Une machine selon la revendication 5, dans laquelle le détecteur de tension de coupe comprend un intégrateur (4) connecté à des résistances (R1, R2) qui sont connectées entre la pièce (2) et l'électrode en forme de fil (1).

7. Une machine selon la revendication 5 ou 6, dans laquelle le système d'asservissement d'avance est conçu de façon à commander la vitesse d'avance (F) pour maintenir la tension de coupe moyenne pratiquement constante.

8. Une machine selon l'une quelconque des revendications précédentes, dans laquelle les moyens d'entrée consistent en un clavier.

# FIG. 1

# FIG. 2

```
  ┌─────────────────────────────────┐
  │  START   DISCHARGE   MACHINING  │
  └─────────────────────────────────┘
```

HAS FIXED TIME PASSED?

NO

YES

a = "I"

NO

YES

DETECT FEED RATE F

DETECT TRUE MACHINING CURRENT $I_T$

$$h = K \cdot \frac{I_T}{F \cdot d}$$

SWITCH ELECTRIC CONDITIONS FOR MACHINING

## FIG. 3

| THICKNESS OF WORKPIECE | NO – LOAD VOLTAGE | PEAK CURRENT | ON TIME | OFF TIME |
|---|---|---|---|---|
| $h_1$ | $V_{S1}$ | $I_{P1}$ | $T_{ON1}$ | $T_{OFF1}$ |
| $h_2$ | $V_{S2}$ | $I_{P2}$ | $T_{ON2}$ | $T_{OFF2}$ |
| $h_3$ | $V_{S3}$ | $I_{P3}$ | $T_{ON3}$ | $T_{OFF3}$ |
| $h_4$ | $V_{S4}$ | $I_{P4}$ | $T_{ON4}$ | $T_{OFF4}$ |
| ⋮ | ⋮ | ⋮ | ⋮ | ⋮ |
| $h_{n-1}$ | $V_{S(n-1)}$ | $I_{P(n-1)}$ | $T_{ON(n-1)}$ | $T_{OFF(n-1)}$ |
| $h_n$ | $V_{Sn}$ | $I_{Pn}$ | $T_{ONn}$ | $T_{OFFn}$ |

0 102 693